(19)

Europäisches
Patentamt
European
Patent Office
Office européen
des brevets

(11) **EP 2 076 347 B1**

(12) **EUROPEAN PATENT SPECIFICATION**

(45) Date of publication and mention
of the grant of the patent:
**05.04.2017 Bulletin 2017/14**

(51) Int Cl.:
**B23B 51/06** (2006.01)　　　**B23C 5/28** (2006.01)

(21) Application number: **07825275.6**

(22) Date of filing: **04.10.2007**

(86) International application number:
**PCT/IB2007/002953**

(87) International publication number:
**WO 2008/044115 (17.04.2008 Gazette 2008/16)**

(54) **MILLING TOOL AND METHOD, IN PARTICULAR FOR MILLING COMPOSITE MATERIALS**

FRÄSWERKZEUG UND FRÄSVERFAHREN, INSBESONDERS ZUM FRÄSEN VON
VERBUNDWERKSTOFFE

OUTIL ET PROCÉDÉ DE FRAISAGE, DESTINÉS EN PARTICULIER AU FRAISAGE DE MATÉRIAUX
COMPOSITES

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **09.10.2006 IT TO20060724**

(43) Date of publication of application:
**08.07.2009 Bulletin 2009/28**

(73) Proprietor: **Alenia Aermacchi S.p.A.**
**21040 Venegono Superiore (Varese) (IT)**

(72) Inventors:
  • **GALOTA, Vincenzo**
    **10146 Torino (IT)**
  • **FALCHERO, Aldo**
    **10051 Avigliana (Torino) (IT)**
  • **MANCINA, Guido**
    **22073 Fino Mornasco (Como) (IT)**

(74) Representative: **Robba, Pierpaolo**
**Interpatent S.R.L.**
**Via Caboto, 35**
**10129 Torino (IT)**

(56) References cited:
**EP-A- 0 599 393　　EP-A- 1 270 123
DD-A1- 267 211**

  • **Y. SU ET AL.: "Refrigerated cooling air cutting of
difficult-to-cut materials", International Journal
of Machine Tools & Manufacture , 26 June 2006
(2006-06-26), Retrieved from the Internet:
URL:http://www.sciencedirect.com/science/a
rticle/pii/S089069550600191X [retrieved on
2012-08-23]**
  • **A. SLOCOMBE, L. LI: "Laser ablation machining
of metal/polymer composite materials", Applied
Surface Science , 2000, Retrieved from the
Internet:
URL:http://144.206.159.178/ft/68/11380/218
474.pdf [retrieved on 2012-08-23]**

## Description

Field of the invention

The present invention concerns a method for milling highly abrasive materials, such as for instance composite materials formed by carbon fibres embedded in an epoxy resin (see for example EP-A-1270123).

State of the art

Several criticalities are encountered during chip forming machining of composite materials comprising carbon fibres impregnated with epoxy resins.

Some of such criticalities are related with problems in cooling the cutting area: the temperature of the composite material in the cutting area must be kept below relatively low values - approximately, of the order of 180°C - to avoid that exceeding the polymerisation temperature causes burning of the epoxy matrix, thereby deteriorating the mechanical characteristics of the composite material. However, cooling the cutting area is complicated by the impossibility of using lubricants and cooling liquids, which would pollute the composite material to be machined.

Other difficulties are related with the considerable abrasiveness of the above-mentioned composite materials and of the powders created, in place of chips, during tool machining: this causes a quick wear of the cutting edges of the tools.

Further difficulties are connected to the manufacturing processes required for making milling tools.

For instance, document DD-A-267211 discloses a tool arranged to remove chips by using a washing drill connected to an internal longitudinal channel. The drill has a slanting direction, is internally threaded and comprises a conical section in the direction of the longitudinal channel. The known drill can ameliorate cooling but is very difficult to manufacture.

It is an object of the present invention to provide a method enabling an efficient tool machining of highly abrasive composite materials, such as for instance composite materials comprising carbon fibres impregnated with epoxy resins.

Summary of the invention

According to a first aspect of the invention, such object is achieved by a method having the features as claimed in claim 1.

The advantages afforded by the present invention will become more apparent to the skilled in the art from the following detailed description of some non-limiting particular embodiments, shown in the following schematic drawings.

List of ihe Fieures

Fig. 1 is a perspective view of a first embodiment of a milling tool arranged for performing the method according to the present invention;

Fig. 2 is a cross-sectional view of the tool of Fig. 1, according to section plane A - A;

Fig. 3 is a side view of the tool of Fig. 1;

Fig. 4 is a cross-sectional view, according to a section plane perpendicular to rotation axis AR of the tool, of a detail of a cutting insert of the tool of Fig. 1;

Fig. 5 is a first side view of a second embodiment of a milling tool arranged for performing the method according to the present invention;

Fig. 6 is a side view of the tool of Fig. 5, taken in a direction orthogonal to that of Fig. 5;

Fig. 7 shows the tool of Fig. 5 when viewed along the rotation axis of the same tool.

Detailed description

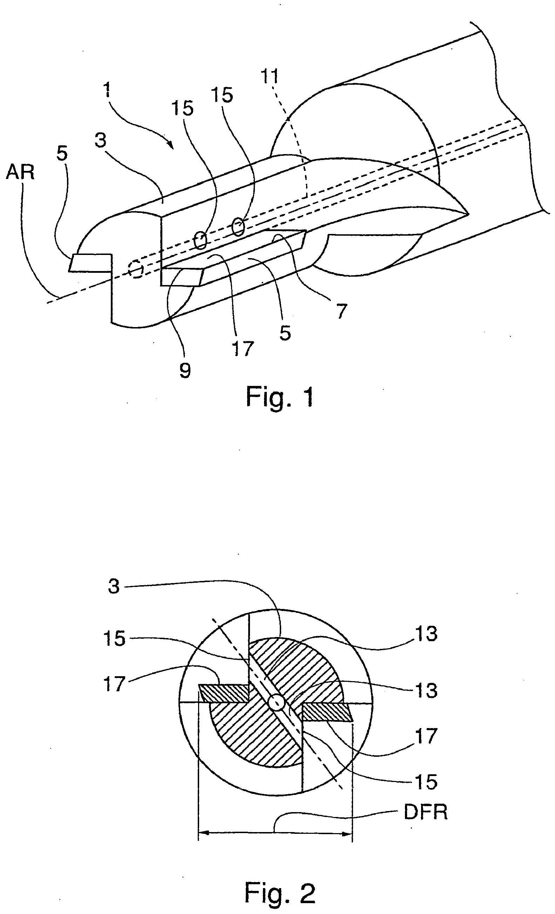

Figs. 1 to 4 relate to a first embodiment of a milling tool arranged for performing the method according to the present invention.

Such a tool, generally denoted by 1, includes a cutting-insert holder 3 having, in the present example, the shape of an elongated stem. A pair of cutting inserts 5, each having a side cutting edge 7 and an end cutting edge 9 formed thereon, are secured to holder 3. Side cutting edges 7 enable side milling by tool 1, e.g. for contouring and trimming operations, whereas end cutting edges 9 enable milling by tool 1 while the same is advancing along its rotation axis AR. That is, tool 1 can perform both peripheral milling and end milling.

According to the present invention, tool 1 is equipped with washing channels 11, 13 through which a suitable fluid, preferably but not necessarily air, can circulate inside cutting-insert holder 3 and be discharged through multiple outlet holes 15 located close to and opposite cutting surfaces 17 of cutting inserts 5, so as to impinge, possibly directly, on said cutting faces and wash them by jets of compressed air or other fluids, in order to quickly remove from cutting edges 7, 9 powders produced during machining. The highly abrasive powders are thus prevented from quickly wearing and deteriorating cutting edges 7, 9 due to too long a permanence in the spaces between the cutting edges and the surface of the composite material being cut by the same edges. Moreover, a finer roughness, or anyway a better surface finishing, of the surfaces being cut is achieved. Indeed, it is deemed that the powders worsen the roughness of the surfaces being cut.

The cooling and powder removal system operating from the inside of tool 1 has proven more effective than systems operating with air jets from the outside, which other companies were experimenting when the present invention has been conceived and developed.

In the exemplary embodiment of Figs. 1 to 4, a longitudinal channel 11 and two transverse channels 13 are formed internally of tool 1. The former extends coaxially with and longitudinally of tool 1 and rotation axis AR thereof, and the latter branch off from longitudinal channel 11 transversally of tool 1 and rotation axis AR thereof. In the present description, channels 11 and 13 are also referred to as "washing channels". In the embodiment of Figs. 1 to 4, transverse channels 13 emerge outside tool 1 through four outlet holes 15 located close to and opposite cutting surfaces 17 of cutting inserts 5.

The portion of transverse channels 13 near outlet holes 15, and the outlet holes themselves, have preferably a diameter in the range of about 0.5 to 8 mm and, more preferably, of 1 mm to 4 mm.

Number NF of outlet holes 15 washing a given cutting face 17 is preferably determined according to the following relation:

$$(1) \qquad\qquad NF = \alpha \cdot LT$$

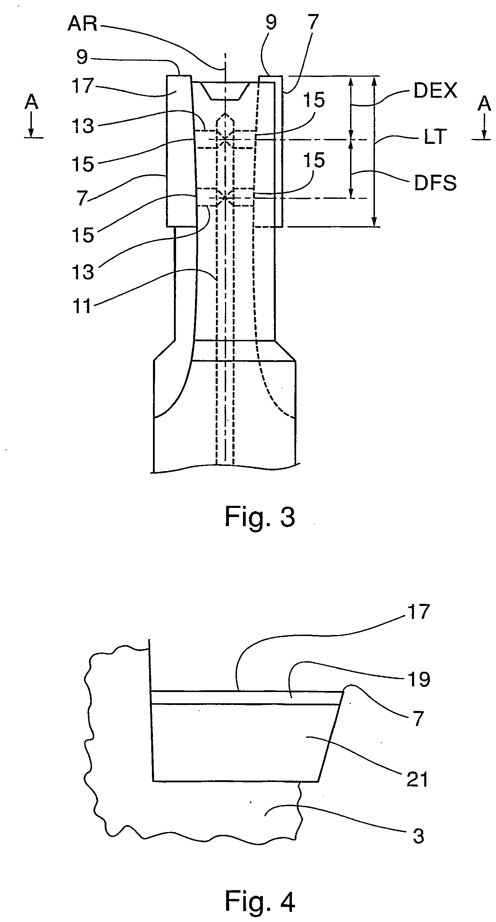

where LT is the length of side cutting edge 7 (Fig. 3) in millimetres and $\alpha$ is a multiplication factor ranging from 0.04 to 0.4 and more preferably from 0.08 to 0.18.

Diameter DFO of each outlet hole 15 is preferably determined according to the following relation:

$$(2) \qquad\qquad DFO = \alpha \cdot DFR$$

where DFR is the cutting diameter of the cutter (Fig. 2), i.e. the diameter of the cylinder described by side cutting edges 7, under design conditions, during machining.

Outlet hole 15 closest to the end of tool 1 is preferably spaced apart from said free end, along rotation axis AR, by a distance DEX (Fig. 3) that substantially ranges from two thirds and a quarter of the cutting diameter of the cutter. More preferably, such distance DEX is substantially not lower than a third of the cutting diameter of the cutter.

The axes of two adjacent outlet holes 15 are preferably spaced apart by a distance DFS (Fig. 3) that is substantially not lower than a quarter of length LT of side cutting edge 7.

Side and/or end cutting edges 7, 9 of cutting inserts 5 are formed on a layer of cutting material 19 (Fig. 4) that preferably is polycrystalline diamond - also referred to, in technical jargon, as PCD (PolyCrystalline Diamond) or PDC (Polycrystalline Diamond Compact) - or tungsten carbide (WC). Such a layer 19 preferably comprises synthetic diamond micropowders with a grain size in the range 2 to 30 thousandths of millimetre. The choice of such a material and such a grain size results in a significant improvement to the length of the operating life of tool 1.

Layer 19 of polycrystalline diamond preferably has a thickness not lower than 0.1 mm and, more preferably, not lower than 0.4 mm (e.g. a thickness in the range 0.4 to 1.5 mm). Such layer 19 of polycrystalline diamond is preferably sintered on an underlying layer 21 of tungsten carbide, and the overall thickness of layers 19 of polycrystalline diamond and 21 of tungsten carbide is preferably 0.8 to 3.2 mm.

Cutting inserts 5 formed by layer 19 of polycrystalline diamond and layer 21 of tungsten carbide are preferably secured to cutting-insert holder 3 by brazing, and cutting-insert holder 3 too is preferably made of tungsten carbide.

Securing layer 19 of polycrystalline diamond onto substrate 21 of tungsten carbide by sintering and securing cutting inserts 5 to holder 3 by brazing assists in lengthening the operating life of tool 1. Indeed, such securing systems allow obtaining a more robust, compact and monolithic assembly, by reducing vibrations and unwanted movements and making the cutting edges of the tool work in conditions that better approach design conditions. Moreover, such systems, by eliminating or substantially reducing gaps and hollows between cutting inserts 5 and holder 3, if compared to a merely mechanical system for fastening cutting inserts 5, provide for a better conductive heat transmission from the outside towards the inside of tool I, where washing channels are formed, thereby increasing the cooling effect of the channels. At the same time, cooling the polycrystalline diamond, or other cutting material, improves its abrasion resistance.

By combining the above features, in particular by combining washing channels inside the milling tool with the choice of materials described above, in particular the choice of polycrystalline diamond as cutting material, the operating life of a tool 1 could be increased even by 1,500 to 2,000% or more in comparison to prior art integral, non-cooled tools of tungsten carbide. Indeed, an operating life exceeding 2 m of cutting length has never been attained by said prior art tools while meeting predetermined quality requirements, whereas operating lives even as long as 40 m of cutting length have been attained by the above-described cooled tools of polycrystalline diamond according to the invention. At the same time, by means of a flow of cooling air the temperature in the cutting area could be kept below 180°C, *i.e.* below the polymerisation temperature of the composite material being milled.

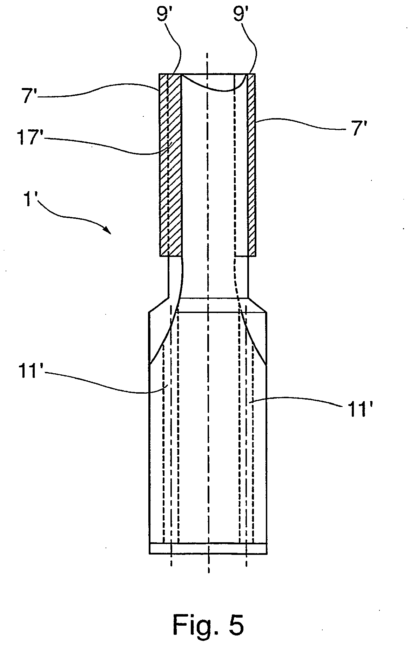

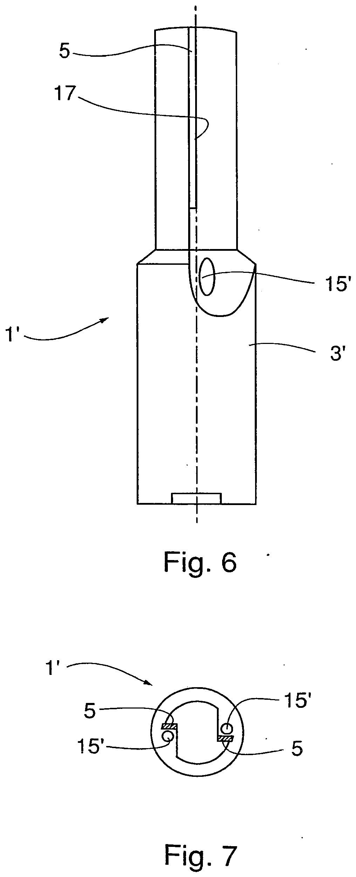

Figs. 5 to 7 relate to a second embodiment of a milling tool arranged for performing the method according to the present invention. In such a second embodiment, tool 1' has two outlet holes 15' arranged to emit jets of air or another cleaning fluid towards cutting faces 17', longitudinally of rotation axis of tool 1' instead of transversally as in the embodiment of Figs. 1 to 4. Two washing channels 11', one for each outlet hole 15', are preferably formed inside tool 1'. Such washing channels 11' are preferably longitudinally arranged relative to rotation axis AR of the tool, are as much rectilinear as possible and are not coaxial with rotation axis AR, whereas washing channel 11 in the exemplary embodiment of Figs. 1 to 4 is coaxial with rotation axis AR. The choice of the materials and the system for securing them onto tool 1' are preferably the same as in the embodiment of Figs. 1 to 4.

The Applicant has realised that a good cooling of tool 1' and an effective removal of milling powders from the cutting areas are achieved with such a second embodiment too, even if not so satisfactorily as with the outlet hole arrangement used in the embodiment of Figs. 1 to 4. In the embodiment of Figs. 1 to 4, the transverse orientation, relative to rotation axis AR, of the jets of air or another cleaning fluid discharged from outlet holes 15 seems to make removal of offcuts, chips and powders from the cutting areas more effective.

The invention concerns a method of milling a composite material comprising a reinforcing material embedded in a polymer matrix. In a particular embodiment of such a method, the reinforcing material of the composite material consists of carbon fibres and such fibres are embedded in a matrix of epoxy resin. Such a composite material is milled by means of tool 1 or 1' described above, by injecting compressed air into washing channels 11, 13 or 11'.

Several changes and modifications are possible in the exemplary embodiments described above, without departing from the scope of the invention.

For instance, the number of cutting inserts 5, 5' can obviously be greater or smaller than two. Other cutting materials, such as tungsten carbide, silicon carbide, boron carbide, titanium boride, titanium nitride, aluminium nitride, cubic boron nitride, silicon nitride, alumina, SiAlON or other suitable carbides or nitrides can be used in place of polycrystalline diamond.

Cutting inserts 5, 5' can even be mechanically secured, e.g. by means of screws or fixed-joint systems, to holders 3 and 3'. In this respect, it will be appreciated that, in the present description, the term "cutting inserts" includes cutting bodies secured to a cutting-insert holder not only by brazing, soldering, sintering or gluing, but also by reversible or irreversible mechanical systems, or other different securing systems. Nitrogen, other inert gases or, still more generally, suitable gaseous substances, such as gases, vapours and aerosols, can be used in place of air as washing fluid. Clearly, still further modifications are possible without departing from the scope of the invention as defined by the appended claims.

**Claims**

**1.** A method of milling a material, wherein the method comprises the following steps:

- providing a milling tool (1, 1') arranged to perform milling of said material while rotating about a predetermined rotation axis (AR) and including:

a side cutting edges (7, 7'), substantially located on the sides of said tool (1, 1');
a cutting face (17), on which possible offcuts, chips and powders produced by said tool (1, 1') are deposited and flow during machining; and
a channel (11, 13, 11'), which is formed inside said tool (1, 1') and through which a cleaning fluid can flow; said channel (11, 13, 11') emerging outside the tool (1, 1') through an outlet hole (15, 15') facing the cutting face (17) so that said cleaning fluid directly impinges onto said cutting face (17); and

- milling said material by means of said tool (1, 1') while injecting said cleaning fluid into said channel (11, 13, 11');

said method being **characterised in that** said material is a composite material comprising a reinforcing material embedded in a polymer matrix;

**in that** said cleaning fluid is a gaseous fluid chosen out of the following group: air, nitrogen, an inert gas; and

**in that** said channel is a washing channel (11, 13, 11'), wherein said cleaning fluid removes from the side cutting edges possible offcuts, chips and powders produced by the tool (1, 1') during machining while said cleaning fluid directly impinges onto said cutting faces (17) and washes them by jets of said fluid, said jets of fluid being adapted to keep the temperature in the cutting area below the polymerisation temperature of said material being milled.

2. The method as claimed in claim 1, wherein the reinforcing material comprises carbon fibres.

3. The method as claimed in claim 1 or 2, wherein the polymeric matrix comprises an epoxy resin.

4. The method as claimed in any of the preceding claims, wherein said tool (1, 1') includes an end cutting edge (9, 9') located at the front end of the tool (1, 1'), and an outlet hole (15, 15') facing the cutting face (17) so that the cleaning fluid impinges onto the cutting face (17) thereby removing from the end cutting edge possible offcuts, chips and powders produced by the tool (1, 1') during machining.

5. The method as claimed in any of the preceding claims, wherein in said tool (1, 1') at least one out of the side cutting edge (7, 7') and the end cutting edge (9, 9') is formed on a layer (19) of a cutting material comprising one or more materials chosen out of the following group: diamond, polycrystalline diamond, carbides, nitrides, tungsten carbide, silicon carbide, boron carbide, titanium boride, titanium nitride, aluminium nitride, cubic boron nitride silicon nitride, alumina.

6. The method as claimed in claim 5, wherein said layer (19) of cutting material is formed by sintering on an underlying layer (21) of tungsten carbide.

7. The method as claimed in claim 6, wherein the assembly of the layer (19) of cutting material and the underlying layer (21) of tungsten carbide is secured to a cutting-insert holder (3).

8. The method as claimed in any of the preceding claims, wherein said outlet hole (15) is arranged to direct a jet of cleaning fluid transversally of the rotation axis (AR) of the tool (1).

9. The method as claimed in any of claims 1 to 7, wherein said outlet hole (15) is arranged to direct a jet of cleaning fluid longitudinally of the rotation axis (AR) of the tool (1).

10. The method as claimed in any of the preceding claims, wherein said outlet hole (15, 15') has a diameter in the range of about 0.5 mm to 8 mm.

11. The method as claimed in any of the preceding claims, wherein the side cutting edge (7, 7') is so constructed that, while rotating about the rotation axis (AR) of the tool (1, 1'), it describes a cylinder with diameter DFR, and the outlet hole (15) has a diameter (DFO) in the range of about 0.04 to 0.4 times diameter DFR.

12. The method as claimed in any of the preceding claims, wherein the number (NF) of outlet holes (15) arranged to direct jets of the cleaning fluid onto the cutting face (17) is 0.04 to 0.4 times the length (LT) over which the side cutting edge (7, 7') extends along rotation axis (AR) of the tool (1, 1').

13. The method as claimed in any of the preceding claims, wherein the outlet hole (15) closest to one end of the tool (1) is spaced apart from said end by a distance (DEX) that is substantially in the range of two thirds to a quarter of the diameter DFR of the cylinder described by the side cutting edge (7, 7') while rotating about the rotation axis (AR) of the tool (1, 1').

**Patentansprüche**

1. Verfahren zum Fräsen eines Werkstoffs, wobei das Verfahren die folgenden Schritte enthält:

- Bereitstellen eines Fräswerkzeugs (1, 1'), das dafür vorgesehen ist, das Fräsen des Werkstoffs durchzuführen, während es sich um eine vorgegebene Rotationsachse (AR) dreht, und aufweist:

Schneidseitenkanten (7, 7'), die im Wesentlichen an den Seiten des Werkzeugs (1, 1') angeordnet sind, einer Schneidfläche (17), an der eventuelle Abschnitte, Späne und Pulver, die von dem Werkzeug (1, 1') erzeugt werden, abgelagert werden und bei der Bearbeitung entlang strömen, und

einem Kanal (11, 13, 11'), der in dem Werkzeug (1, 1') ausgebildet ist und durch den ein Reinigungsfluid strömen kann, wobei der Kanal (11, 13, 11') durch eine Austrittsöffnung (15, 15'), die der Schneidfläche (17) zugewandt ist, aus dem Werkzeug (1, 1') austrit, sodass das Reinigungsfluid direkt auf die Schneidfläche (17) auftrifft, und

- Fräsen des Werkstoffes mittels des Werkzeugs (1, 1'), während das Reinigungsfluid in den Kanal (11, 13, 11') injiziert wird,

wobei das Verfahren **dadurch gekennzeichnet ist, dass** der Werkstoff ein Verbundwerkstoff ist, der ein verstärkendes Material enthält, das in eine Polymermatrix eingebettet ist,

dass das Reinigungsfluid ein gasförmiges Fluid ist, das aus der folgenden Gruppe ausgewählt ist: Luft, Stickstoff, Inertgas, und

dass der Kanal ein Reinigungskanal (11, 13, 11') ist, wobei Reinigungsfluid von den seitlichen Schneidkanten eventuelle Abschnitte, Späne und Pulver entfernt, die durch das Werkzeug (1, 1') beim Fräsen erzeugt werden, während das Reinigungsfluid direkt auf die Schneidflächen (17) trifft und diese durch Fluidstrahlen reinigt, wobei die Fluidstrahlen so beschaffen sind, dass sie die Temperatur in dem Schneidbereich unter der Polymerisationstemperatur des gefrästen Werkstoffes halten.

2. Verfahren nach Anspruch 1, wobei das verstärkende Material Karbonfasern enthält.

3. Verfahren nach Anspruch 1 oder 2, wobei die Polymermatrix ein Epoxidharz enthält.

4. Verfahren nach einem der vorstehende Ansprüche, wobei das Werkzeug (1, 1') hat eine Schneidendkante (9, 9') aufweist, die an einem vorderen Ende des Werkzeugs (1, 1') angeordnet ist, und eine Austrittsöffnung (15, 15'), die der Schneidfläche (17) zugewandt ist, sodass das Reinigungsfluid auf die Schneidfläche (17) trifft und dadurch von der Schneidendkante eventuell vorhandenen Abschnitt, Späne und Pulver, die von dem Werkzeug (1, 1') bei der Bearbeitung erzeugt werden, entfernt werden.

5. Verfahren nach einem der vorstehenden Ansprüche, wobei bei dem Werkzeug (1, 1') wenigstens eine der Schneidseitenkanten (7, 7') und der Schneidendkante (9, 9') an einer Schicht (19) eines Schneidmaterials ausgebildet ist, das eines oder mehrere aus der folgende Gruppe ausgewählten Materialien enthält: Diamant, polykristalliner Diamant, Karbide, Nitride, Wolframkarbid, Silikonkarbide, Borkarbid, Titanborid, Titannitrid, Aluminiumnitrid, kubisches Bornitrid, Silikonnitrid, Aluminiumoxid.

6. Verfahren nach Anspruch 5, wobei die Schicht (19) aus Schneidmaterial durch Sintern auf einer darunter liegenden Schicht (21) aus Wolframkarbid hergestellt ist.

7. Verfahren nach Anspruch 6, wobei der Verbund aus der Schicht (19) des Schneidmaterials und der darunter liegenden Schicht (21) aus Wolframkarbid von einem Schneideinsatzhalter (3) gesichert wird.

8. Verfahren nach einem der vorstehenden Ansprüche, wobei die Austrittsöffnung (15) so angeordnet ist, dass sie einen Reinigungsfluidstrahl transversal zu der Rotationsachse (AR) des Werkzeugs (1) ausrichtet.

9. Verfahren nach einem der Ansprüche 1 bis 7, wobei die Austrittsöffnung (15) so angeordnet ist, dass sie einen Reinigungsfluidstrahl längs zur Rotationsachse (AR) des Werkzeugs (1) ausrichtet.

10. Verfahren nach einem der vorstehenden Ansprüche, wobei die Austrittsöffnung (15, 15') einen Durchmesser im Bereich von etwa 0,5 mm bis 8 mm hat.

11. Verfahren nach einem der vorstehenden Ansprüche, wobei die Schneidseitenkante (7, 7') so konstruiert ist, dass sie bei der Drehung um die Rotationsachse (AR) des Werkzeugs (1, 1') einen Zylinder mit einem Durchmesser DFR beschreibt, und die Austrittsöffnung (15) einen Durchmesser (DFO) im Bereich von etwa dem 0,04 bis 0,4-fachen des Durchmessers DFR hat.

12. Verfahren nach einem der vorstehenden Ansprüche, wobei die Anzahl (NF) der Austrittsöffnungen (15), die so angeordnet sind, dass sie Reinigungsfluidstrahlen auf die Schneidfläche (17) richten, das 0,04 bis 0,4-fache der Länge (LT) beträgt, über die sich die Schneidseitenkante (7, 7') entlang der Drehachse (AR) des Werkzeugs (1, 1') erstreckt.

13. Verfahren nach einem der vorstehenden Ansprüche, wobei die Austrittsöffnung (15), die einem Ende des Werkzeugs (1) am nächsten gelegen ist, von diesem Ende einen Abstand (DEX) hat, der im Wesentlichen im Bereich von 2/3 bis ¼ des Durchmessers DFR des Zylinders ist, der von der Schneidseitenkante (7, 7') bei der Drehung vom die Rotationsachse (AR) des Werkzeugs (1, 1') beschrieben wird.

**Revendications**

1. Procédé de fraisage d'un matériau, lequel procédé comprend les étapes suivantes :

   - une fourniture d'un outil de fraisage (1, 1') agencé pour réaliser un fraisage dudit matériau tout en tournant autour d'un axe de rotation (AR) prédéterminé et comportant :

     des arêtes de coupe de côté (7, 7'), situées sensiblement sur les côtés dudit outil (1, 1') ;
     une face de coupe (17), sur laquelle d'éventuels chutes, copeaux et poudres produits par ledit outil (1, 1') sont déposés et circulent pendant l'usinage ; et
     un canal (11, 13, 11'), qui est formé à l'intérieur dudit outil (1, 1') et à travers lequel un fluide de nettoyage peut circuler ; ledit canal (11, 13, 11') émergeant à l'extérieur de l'outil (1, 1') via un orifice de sortie (15, 15') en regard de la face de coupe (17) de sorte que ledit fluide de nettoyage frappe directement ladite face de coupe (17) ; et

   - un fraisage dudit matériau au moyen dudit outil (1, 1') tout en injectant ledit fluide de nettoyage dans ledit canal (11, 13, 11') ;

   ledit procédé étant **caractérisé en ce que** ledit matériau est un matériau composite comprenant un matériau de renforcement incorporé dans une matrice polymère ;
   **en ce que** ledit fluide de nettoyage est un fluide gazeux choisi dans le groupe suivant : l'air, l'azote, un gaz inerte ; et
   **en ce que** ledit canal est un canal de lavage (11, 13, 11'), dans lequel ledit fluide de nettoyage enlève des arêtes de coupe de côté d'éventuels chutes, copeaux et poudres produits par l'outil (1, 1') pendant ledit usinage tandis que ledit fluide de nettoyage frappe directement lesdites faces de coupe (17) et les lave par des jets dudit fluide, lesdits jets de fluide étant adaptés pour conserver la température dans la zone de coupe en dessous de la température de polymérisation dudit matériau qui est fraisé.

2. Procédé selon la revendication 1, dans lequel le matériau de renforcement comprend des fibres de carbone.

3. Procédé selon la revendication 1 ou 2, dans lequel la matrice polymérique comprend une résine époxy.

4. Procédé selon l'une quelconque des revendications précédentes, dans lequel ledit outil (1, 1') comporte une arête de coupe d'extrémité (9, 9') située à l'extrémité avant de l'outil (1, 1'), et un orifice de sortie (15, 15') en regard de la face de coupe (17) de sorte que le fluide de nettoyage frappe la face de coupe (17) enlevant ainsi de l'arête de coupe d'extrémité d'éventuels chutes, copeaux et poudres produits par l'outil (1, 1') pendant l'usinage.

5. Procédé selon l'une quelconque des revendications précédentes, dans lequel dans ledit outil (1, 1') au moins l'une de l'arête de coupe de côté (7, 7') et de l'arête de coupe d'extrémité (9, 9') est formée sur une couche (19) d'un matériau de coupe comprenant un ou plusieurs matériaux choisis dans le groupe suivant : le diamant, le diamant polycristallin, les carbures, les nitrures, le carbure de tungstène, le carbure de silicium, le carbure de bore, le borure de titane, le nitrure de titane, le nitrure d'aluminium, le nitrure de de bore cubique, le nitrure de silicium, l'alumine.

6. Procédé selon la revendication 5, dans lequel ladite couche (19) de matériau de coupe est formée par frittage sur une couche sous-jacente (21) de carbure de tungstène.

7. Procédé selon la revendication 6, dans lequel l'ensemble de la couche (19) de matériau de coupe et de la couche sous-jacente (21) de carbure de tungstène est fixé à un support d'insert de coupe (3).

8. Procédé selon l'une quelconque des revendications précédentes, dans lequel ledit orifice de sortie (15) est agencé pour diriger un jet de fluide de nettoyage transversalement de l'axe de rotation (AR) de l'outil (1).

9. Procédé selon l'une quelconque des revendications 1 à 7, dans lequel ledit orifice de sortie (15) est agencé pour diriger un jet de fluide de nettoyage longitudinalement de l'axe de rotation (AR) de l'outil (1).

10. Procédé selon l'une quelconque des revendications précédentes, dans lequel ledit orifice de sortie (15, 15') a un diamètre dans la plage d'environ 0,5 mm à 8 mm.

11. Procédé selon l'une quelconque des revendications précédentes, dans lequel l'arête de coupe de côté (7, 7') est construite de sorte que, tout en tournant autour de l'axe de rotation (AR) de l'outil (1, 1'), elle décrive un cylindre avec un diamètre DFR, et l'orifice de sortie (15) a un diamètre (DFO) dans la plage d'environ 0,04 à 0,4 fois le diamètre DFR.

12. Procédé selon l'une quelconque des revendications précédentes, dans lequel le nombre (NF) d'orifices de sortie (15) agencés pour diriger des jets du fluide de nettoyage sur la face de coupe (17) est de 0,04 à 0,4 fois la longueur (LT) sur laquelle l'arête de coupe de côté (7, 7') s'étend le long de l'axe de rotation (AR) de l'outil (1, 1').

13. Procédé selon l'une quelconque des revendications précédentes, dans lequel l'orifice de sortie (15) le plus proche d'une extrémité de l'outil (1) est espacé de ladite extrémité d'une distance (DEX) qui est sensiblement dans la plage de deux tiers à un quart du diamètre DFR du cylindre décrit par l'arête de coupe de côté (7, 7') tout en tournant autour de l'axe de rotation (AR) de l'outil (1, 1').

Fig. 1

Fig. 2

AR

9

17

13

15

7

15

13

11

9 7

DEX

15

A ↓ LT A ↓

15

DFS

**Fig. 3**

17

19

7

21

3

**Fig. 4**

Fig. 5

5

17

1'

15'

3'

Fig. 6

1'

5

15'

15'

5

Fig. 7

**EP 2 076 347 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1270123 A

- DD 267211 A